# FASCICULE DE BREVET EUROPEEN

(11) **EP 0 993 765 B1**
(45) Date de publication et mention de la délivrance du brevet: **07.01.2004**
(21) Numéro de dépôt: 99440264.2
(22) Date de dépôt: 01.10.1999
(51) Int. Cl.: A01F 29/00

(54) **Machine de distribution**
Verteilmaschine
Distributing machine

(30) Priorité: 16.10.1998 FR 9813092
(43) Date de publication de la demande: 19.04.2000
(73) Titulaire: Kuhn-Audureau S.A., 85260 La Copechagniere (FR)
(72) Inventeur: Bonnaudet, Jean-Claude, 85260 La Copechagniere (FR); Rulleau, Samuel, 85140 Chauche (FR)
(74) Mandataire: Andres, Jean-Claude

(56) Documents cités:
- EP-A- 0 860 108
- WO-A-95/28077
- FR-A- 2 718 604

## Description

La présente invention se rapporte à une machine de distribution de produits alimentaires ou autres pour le bétail, comportant au moins une benne pour transporter les produits, un ventilateur d'éjection qui est logé dans un carter à l'extrémité avant de la benne, lequel carter comprend une ouverture pour l'entrée et une ouverture latérale pour la sortie des produits, au moins un tambour démêleur qui est muni d'outils de coupe et qui se situe à l'entrée du carter du ventilateur d'éjection et des organes de retenue placés au-dessus dudit tambour démêleur.

La benne peut recevoir des produits tels que du fourrage ou de la paille en vrac ou sous forme de balles. Durant le travail, ces produits sont démêlés et déchiquetés par le tambour démêleur. Celui-ci les fait passer au ventilateur qui les éjecte soit dans des auges s'il s'agit de fourrage, soit les répartit sur le sol lorsqu'il s'agit de paille destinée à constituer une litière pour le bétail.

Sur des machines connues de ce genre, les organes de retenue sont fixés sur la paroi arrière du carter du ventilateur d'éjection ou sur une poutre transversale qui est elle-même solidaire de cette paroi. Une telle réalisation est connue dans le document WO-A-95 28077. Les produits qui sont projetés vers le haut par le tambour démêleur peuvent s'accumuler contre ladite paroi ou ladite poutre. Cela peut provoquer un engorgement au niveau des organes de retenue et empêcher l'arrivée des produits démêlés jusqu'au ventilateur. L'utilisateur est alors amené à arrêter le travail et est obligé de dégager les produits accumulés. Cela lui fait perdre du temps et représente une opération fastidieuse à réaliser.

La présente invention a pour but de proposer une machine simple et qui n'a pas les inconvénients des machines connues.

A cet effet, une importante caractéristique de l'invention consiste en ce qu'au-dessus du tambour démêleur est disposé un déflecteur incliné qui s'étend sensiblement depuis l'ouverture d'entrée du carter d'éjection vers le haut et vers l'arrière sensiblement jusqu'au niveau supérieur des parois latérales de la benne en vue de guider les produits vers l'entrée du carter du ventilateur ou vers la benne et que les organes de retenue s'étendent depuis ledit déflecteur.

Les produits projetés contre la partie inférieure du déflecteur glissent automatiquement dans le carter du ventilateur.

Par contre, ceux qui sont projetés contre sa partie supérieure retombent dans la benne et reviennent automatiquement au tambour démêleur. Le risque d'engorgement du passage vers le ventilateur est ainsi pratiquement supprimé.

Une autre caractéristique de l'invention consiste en ce que les organes de retenue sont constitués par des plaques de forme triangulaire qui s'étendent depuis le déflecteur sensiblement jusque dans la trajectoire des outils de coupe du tambour démêleur. Ces organes de retenue empêchent les gros paquets de produits d'accéder au ventilateur. Ils ne présentent cependant pas de zones contre lesquelles pourraient s'accumuler des produits. Les produits qui passent entre ces organes et qui arrivent jusqu'au déflecteur sont alors guidés comme cela a été décrit précédemment.

D'autres caractéristiques et avantages de l'invention ressortiront des revendications et de la description ci-après d'exemples de réalisation non limitatifs de l'invention, avec référence aux dessins annexés dans lesquels :
- la figure 1 représente une vue de côté avec une coupe partielle d'une machine selon l'invention,
- la figure 2 représente une vue de détail de la machine selon l'invention,
- la figure 3 représente une vue similaire à celle de la figure 1 d'un autre exemple de réalisation.

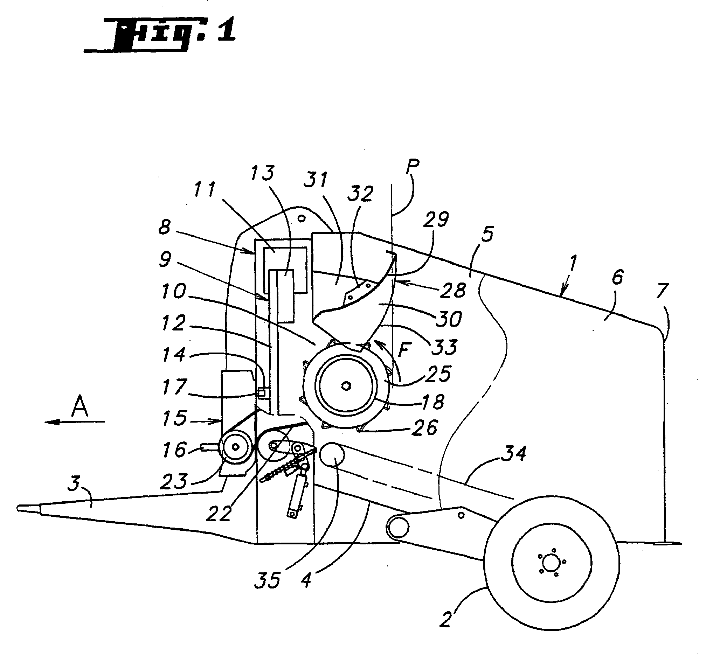

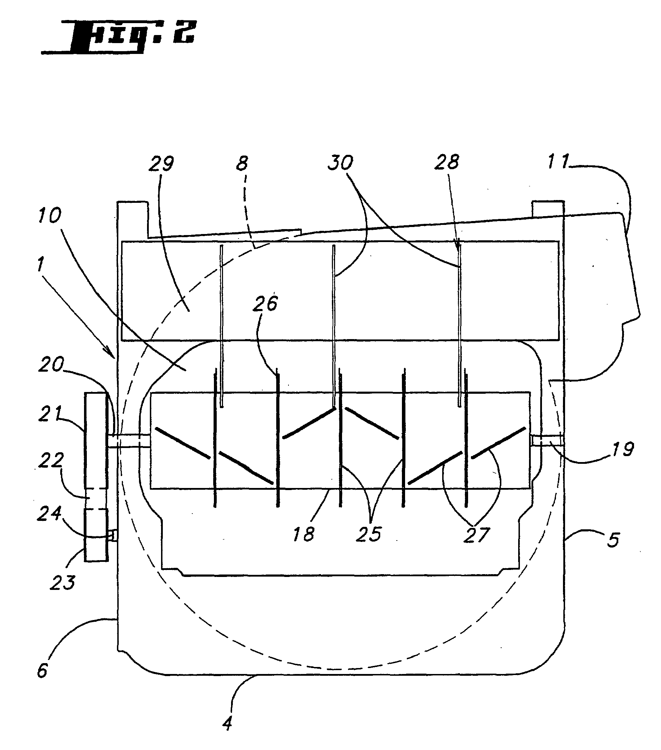

Telle qu'elle est représentée sur les figures 1 et 2, la machine selon l'invention comporte une benne (1) avec deux roues porteuses (2) et un timon (3) pour l'accrochage à un tracteur servant à animer la machine et à la déplacer. La flèche (A) indique le sens de déplacement normal de la machine. Les indications "avant" et "arrière" sont données en fonction de ce sens de déplacement. La benne (1) est avantageusement déplaçable en hauteur par rapport aux roues (2). Cela permet de l'abaisser jusqu'au sol lors de son chargement et de la soulever pour les déplacements.

Ladite benne (1) possède un fond (4) et deux parois latérales (5 et 6). Le côté arrière (7) permet le chargement des produits dans la benne (1). Il peut être fermé au moyen d'un panneau qui est fixé à un bras non représenté. Ce bras peut être articulé sur la benne (1) de manière à permettre de déplacer ledit panneau. Le côté avant de la benne (1) est constitué par un carter (8) dans lequel est logé un ventilateur d'éjection (9). Ce carter (8) possède une ouverture (10) sur le côté orienté vers l'intérieur de la benne (1) et une sortie latérale (11).

Le ventilateur d'éjection (9) est notamment constitué par un disque (12) muni de pales (13) et éventuellement de couteaux. Ce disque (12) est fixé sur un arbre (14) sensiblement horizontal qui permet de l'entraîner en rotation. A l'avant du carter d'éjection (8) est monté un boîtier de distribution (15). Celui-ci comporte une entrée (16) qui peut être reliée à un arbre de prise de force du tracteur, à l'aide d'un arbre intermédiaire. L'arbre (14) du ventilateur est relié à une première sortie (17) dudit boîtier (15).

Devant l'ouverture d'entrée (10) du carter d'éjection (8) est disposé un tambour démêleur (18). Celui-ci se situe ainsi entre les produits chargés dans la benne (1) et le ventilateur (9). Il s'étend entre les parois latérales (5 et 6) de la benne (1). Ses extrémités sont constituées par des arbres (19 et 20) qui sont guidés dans des paliers montés sur lesdites parois latérales (5 et 6), de manière à ce qu'il puisse tourner autour de son axe longitudinal. L'arbre (20) porte une poulie (21) sur laquelle passe une courroie d'entraînement (22). Celle-ci peut être entraînée au moyen d'une deuxième poulie (23) qui est liée à un arbre de transmission (24) qui est relié à une deuxième sortie du boîtier de distribution (15). Il est également possible d'utiliser un deuxième tambour démêleur sensiblement identique au tambour (18) et qui est disposé sous celui-ci. Il ressort notamment de la figure 2 que le tambour démêleur (18) porte sur sa périphérie des couronnes (25) sur lesquelles sont fixés des outils de coupe (26). Lesdites couronnes (25) peuvent avantageusement être au nombre de cinq avec des espaces sensiblement réguliers entre elles. Ce nombre peut cependant varier en fonction de la longueur du tambour démêleur (18). Entre ces couronnes (25), le tambour démêleur (18) porte des palettes (27) de déchiquetage et de projection qui sont inclinées de manière à former des angles d'environ 35° par rapport à l'horizontal. Les palettes (27) situées près des extrémités du tambour (18) sont orientées de telle sorte que leurs faces avant (vu dans le sens de rotation (F) du tambour (18)) soient dirigées vers la partie centrale dudit tambour (18). Inversement, les palettes (27) situées dans cette partie centrale sont orientées de telle sorte que leurs faces avant soient dirigées vers les extrémités correspondantes du tambour (18).

Au-dessus du tambour démêleur (18) sont disposés des organes de retenue (28) et un déflecteur (29). Ce déflecteur (29) a au moins la même longueur que le tambour démêleur (18). Il est incliné et s'étend sensiblement depuis l'ouverture d'entrée (10) du carter d'éjection (8) vers le haut et vers l'arrière sensiblement jusqu'au niveau supérieur des parois (5 et 6) de la benne (1). Dans cet exemple, il s'étend vers l'arrière environ jusqu'à un plan vertical (P) tangent au côté arrière du tambour démêleur (18). Il peut s'arrêter légèrement en avant dudit plan (P) ou bien, comme cela est représenté sur la figure 1, légèrement en arrière de celui-ci.

Ce déflecteur (29) est de préférence rigide. Il peut être plan ou bien courbé sensiblement en forme d'arc de cercle. Son extrémité inférieure peut être davantage dirigée vers le bas.

Les organes de retenue (28) sont constitués par des plaques (30) de forme plus ou moins triangulaire. Elles s'étendent depuis le déflecteur (29) sensiblement jusque dans la trajectoire des outils de coupe (26) du tambour démêleur (18). Ces plaques (30) sont au moins au nombre de deux. Ce nombre peut varier en fonction de la longueur du tambour démêleur (18). L'exemple représenté sur la figure 2 comporte trois plaques (30) dont l'écartement est sensiblement le double de celui des couronnes (25) des outils de coupe (26) sur le tambour démêleur (18). Ces plaques (30) peuvent être fixées sur le déflecteur (29) ou sur des supports (31) situés entre ce déflecteur (29) et le carter d'éjection (8). Dans ce dernier cas, elles comportent des talons (32) qui passent par des ouvertures prévues dans le déflecteur (29).

Les plaques de retenue (30) comportent des côtés arrière (33) qui sont dirigés vers le haut et vers l'arrière à partir du tambour démêleur (18). Elles s'étendent en hauteur pratiquement aussi loin que le déflecteur (29). Lesdits côtés arrière (33) sont avantageusement courbés sur leur plus grande longueur en forme d'arcs de cercles. Les parties inférieures de ces côtés arrière (33) sont dirigées radialement par rapport au tambour démêleur (18). Leurs parties supérieures sont sensiblement verticales. Les côtés avant de ces plaques (30) sont adjacents au déflecteur (29).

Sur le fond (4) de la benne (1) est disposé un tapis (34) de déplacement des produits. Ce tapis (34) est constitué par une bande transporteuse qui passe sur des rouleaux (35) situés près des extrémités avant et arrière de la benne (1). Un de ces rouleaux (35) est entraîné en rotation de sorte qu'il anime le tapis (34) et lui fait amener les produits contenus dans la benne (1) au tambour démêleur (18). Cet entraînement d'un des rouleaux (35) peut être réalisé au moyen d'un moteur hydraulique qui est relié au circuit hydraulique du tracteur par l'intermédiaire de tuyaux.

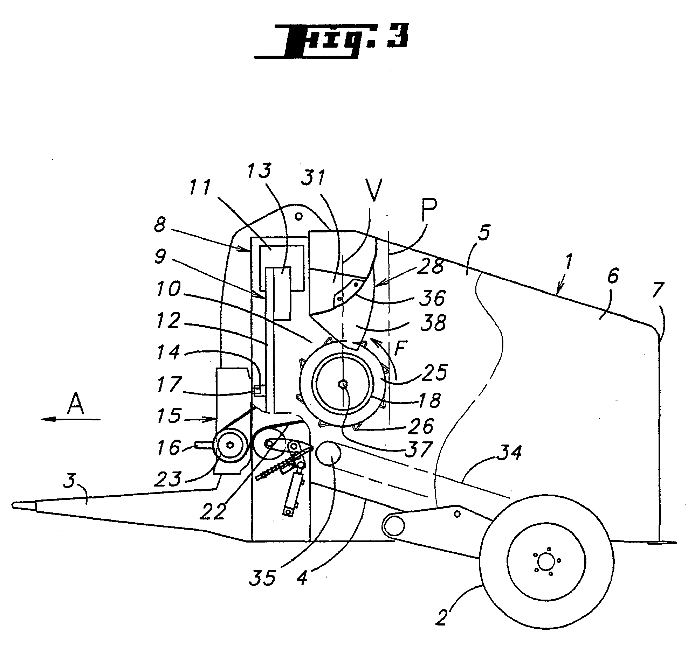

L'exemple selon la figure 3 comporte un grand nombre de pièces identiques à celles de la figure 1. Elles ne seront plus décrites en détail, mais seront désignées par les mêmes repères. Au-dessus du tambour démêleur (18) est disposé un déflecteur (36) qui est incliné et s'étend sensiblement depuis l'ouverture d'entrée (10) du carter d'éjections (8) vers le haut et vers l'arrière sensiblement jusqu'au niveau supérieur des parois (5 et 6) de la benne. La partie inférieure du déflecteur (36) se situe devant un plan vertical (V) passant par l'axe de rotation (37) du tambour démêleur (18). Sa partie supérieure se situe à l'arrière du plan vertical (V) passant par l'axe de rotation (37). Au niveau des bords supérieurs des parois (5 et 6) de la benne (1), le déflecteur se situe entre ledit plan vertical (V) et un autre plan vertical (P) qui est tangent au côté arrière du tambour démêleur ( 18).

Les organes de retenue (28) s'étendent depuis le déflecteur (36) sensiblement jusque dans la trajectoire des outils de coupe (26) du tambour démêleur (18). Ils sont constitués par des plaques (38) plus ou moins de forme triangulaire. Un de leurs côtés est adjacent au déflecteur (36). Leurs côtés arrière sont dirigés vers le haut à partir du tambour démêleur (18) et sont courbés sur une grande partie de leur longueur. Les parties inférieures de ces côtés arrière sont dirigées radialement par rapport au tambour démêleur (18).

L'agencement selon cet exemple est avantageux pour le démêlage de produits présentés sous forme de grandes balles rectangulaires.

Au travail, la benne (1) peut être chargée de fourrage ou de paille en vrac ou sous forme de balles ou même de blocs. Ensuite, la machine est amenée sur le lieu de distribution au moyen du tracteur. Le ventilateur (9) et le tambour démêleur (18) sont alors entraînés en rotation depuis le boîtier de distribution (15). Ledit tambour (18) tourne dans le sens indiqué par la flèche (F). Ses outils de coupe (26) et ses palettes (27) de déchiquetage et de projection détachent une certaine quantité de produits de la masse contenue dans la benne (1) et la font passer par l'entrée (10) dans le carter d'éjection (8). L'orientation des palettes (27) évite une concentration du flux des produits vers le milieu du ventilateur (9), ce qui permet une distribution plus régulière.

Au moins les produits projetés par le tambour démêleur (18) contre la.moitié inférieure du déflecteur incliné (29, 36) glissent automatiquement, en raison de la forme dudit déflecteur (29, 36), vers l'ouverture d'entrée (10) du carter (8). D'autre part, les produits projetés contre la moitié supérieure du déflecteur (29) ricochent sur celui-ci et retombent dans la benne (1). Ainsi, il ne se produit pas d'accumulation qui pourrait provoquer l'obstruction du passage vers l'ouverture d'entrée (10) du carter (8).

Les organes de retenue (28) retiennent les balles de fourrage dans la benne (1) et empêchent les gros paquets de produits d'accéder jusqu'à l'ouverture d'entrée (10) du carter (8). Ces paquets glissent vers le haut sur les côtés arrière (33) de ces organes (28) et retombent dans la benne (1). L'écartement entre les plaques (30, 38) est suffisamment grand pour ne pas gêner le passage des produits correctement démêlés.

Les produits démêlés arrivent ainsi de manière régulière au ventilateur (9) qui les éjecte latéralement au moyen de ses pales (13). Ils peuvent alors être dirigés vers une auge lorsqu'il s'agit de fourrage ou vers une litière lorsqu'il s'agit de paille.

Il est bien évident que l'invention n'est pas limitée aux modes de réalisation décrits ci-dessus et représentés sur les dessins annexés. Des modifications restent possibles, notamment en ce qui concerne la constitution ou le nombre des divers éléments ou par substitution d'équivalents techniques, sans pour autant sortir du domaine de protection tel que défini dans les revendications.

## Revendications

1. Machine de distribution de produits alimentaires ou autres pour le bétail, comportant au moins une benne (1) pour transporter les produits, un ventilateur d'éjection (9) qui est logé dans un carter (8) à l'extrémité avant de la benne (1), lequel carter (8) comprend une ouverture (10) pour l'entrée et une ouverture latérale (11) pour la sortie des produits, au moins un tambour démêleur (18) qui est muni d'outils de coupe (26) et qui se situe à l'entrée du carter (8) du ventilateur d'éjection (9), des organes de retenue (28) placés au-dessus dudit tambour démêleur (18) et au-dessus du tambour démêleur (18) un déflecteur incliné (29, 36), ***caractérisée par le fait* que** ledit déflecteur s'étend sensiblement depuis l'ouverture d'entrée (10) du carter d'éjection (8) vers le haut et vers l'arrière de la benne (1) sensiblement jusqu'au niveau supérieur des parois latérales (5 et 6) de ladite benne (1) en vue de guider les produits vers ladite entrée (10) ou vers la benne (1) et que les organes de retenue (28) s'étendent depuis ledit déflecteur (29, 36).

2. Machine selon la revendication 1, ***caractérisée par le fait* que** le déflecteur (29, 36) est courbé.

3. Machine selon la revendication 1 ou 2, ***caractérisée par le fait* que** le déflecteur (29) s'étend vers l'arrière environ jusqu'à un plan vertical (P) tangent au côté arrière du tambour démêleur (18).

4. Machine selon la revendication 1 ou 2, ***caractérisée par le fait* que** le déflecteur (36) comporte une partie inférieure qui se situe devant un plan vertical (V) passant par l'axe de rotation (37) du tambour démêleur ( 18).

5. Machine selon l'une quelconque des revendications 1, 2 ou 4, ***caractérisée par le fait* que** le déflecteur (36) comporte une partie supérieure qui se situe à l'arrière du plan vertical (V) passant par l'axe de rotation (37) du tambour démêleur (18).

6. Machine selon la revendication 5, ***caractérisée par le fait* qu'**au niveau des bords supérieurs de parois latérales (5 et 6) de la benne (1) le déflecteur (36) se situe entre le plan vertical (V) passant par l'axe de rotation (37) du tambour démêleur (18) et un plan vertical (P) qui est tangent au côté arrière dudit tambour démêleur (18).

7. Machine selon l'une quelconque des revendications précédentes, ***caractérisée par le fait* que** les organes de retenue (28) sont constitués par des plaques (30, 38) de forme triangulaire ayant un côté adjacent au déflecteur (29, 36) et qui s'étendent sensiblement jusque dans la trajectoire des outils de coupe (26) du tambour démêleur (18).

8. Machine selon la revendication 7, ***caractérisée par le fait* que** les plaques de retenue (30, 38) sont au moins au nombre de deux.

9. Machine selon la revendication 7 ou 8, ***caractérisée par le fait* que** l'écartement entre les plaques de retenue (30, 38) est sensiblement le double de celui de couronnes (25) sur lesquelles sont fixés les outils de coupe (26) du tambour démêleur (18).

10. Machine selon l'une quelconque des revendications 7, 8 ou 9, ***caractérisée par le fait* que** les plaques de retenue (30, 38) comportent des côtés arrière (33) qui sont dirigés vers le haut et vers l'arrière à partir du tambour démêleur (18).

11. Machine selon l'une quelconque des revendications 7 à 10, ***caractérisée par le fait* que** les plaques de retenue (30, 38) comportent des côtés arrière (33) qui sont courbés sur leur plus grande longueur en forme d'arcs de cercles.

12. Machine selon la revendication 11, ***caractérisée par le fait* que** les parties inférieures des côtés arrière (33) des plaques de retenue (30, 38) sont dirigées radialement par rapport au tambour de démêlage (18).

13. Machine selon la revendication 11, ***caractérisée par le fait* que** les parties supérieures des côtés arrière (33) des plaques de retenue (30, 38) sont sensiblement verticales.

14. Machine selon l'une quelconque des revendications précédentes, ***caractérisée par le fait* que** le tambour démêleur (18) porte sur sa périphérie des palettes (27) inclinées de manière à former des angles d'environ 35° par rapport à l'horizontale.

15. Machine selon la revendication 14, ***caractérisée par le fait* que** les palettes (27) situées près des extrémités du tambour démêleur (18) sont orientées de telle sorte que leurs faces avant soient dirigées vers la partie centrale dudit tambour (18).

16. Machine selon la revendication 14 ou 15, ***caractérisée par le fait* que** les palettes (27) situées dans la partie centrale du tambour démêleur (18) sont orientées de telle sorte que leurs faces avant soient dirigées vers les extrémités correspondantes dudit tambour (18).

## Patentansprüche

1. Maschine zur Verteilung von Futtermitteln oder anderem Gut für Vieh, mit mindestens einem Wagenkasten (1) zum Transport des Guts, einem in einem Gehäuse (8) am vorderen Ende des Wagenkastens (1) untergebrachten Ausschleudergebläse (9), wobei das Gehäuse (8) eine Öffnung (10) für den Einlass und eine laterale Öffnung (11) für den Auslass des Guts enthält, mindestens einer mit Schneidwerkzeugen (26) versehenen Auflockertrommel (18), die sich am Einlass des Gehäuses (8) des Ausschleudergebläses (9) befindet, über der Auflockertrommel (18) angeordneten Haltegliedem (28) und über der Auflockertrommel (18) einem geneigten Ablenker (29, 36), ***dadurch gekennzeichnet*, dass** sich der Ablenker im Wesentlichen von der Einlassöffnung (10) des Ausschleudergehäuses (8) nach oben und nach der Rückseite des Wagenkastens (1) im Wesentlichen bis zur oberen Höhe der Seitenwände (5 und 6) des Wagenkastens (1) erstreckt, um das Gut zum Einlass (10) oder zum Wagenkasten (1) zu führen, und dass sich die Halteglieder (28) von dem Ablenker (29, 36) aus erstrecken.

2. Maschine nach Anspruch 1, ***dadurch gekennzeichnet,* dass** der Ablenker (29, 36) gekrümmt ist.

3. Maschine nach Anspruch 1 oder 2, ***dadurch gekennzeichnet,* dass** sich der Ablenker (29) ungefähr bis zu einer die Rückseite der Auflockertrommel (18) berührenden Vertikalebene (P) nach hinten erstreckt.

4. Maschine nach Anspruch 1 oder 2, ***dadurch gekennzeichnet*, dass** der Ablenker (36) einen unteren Teil umfasst, der sich vor einer die Drehachse (37) der Auflockertrommel (18) durchquerenden Vertikalebene (V) befindet.

5. Maschine nach irgend einem der Ansprüche 1, 2 oder 4, ***dadurch gekennzeichnet,* dass** der Ablenker (36) einen oberen Teil umfasst, der sich rückwärtig der die Drehachse (37) der Auflockertrommel (18) durchquerenden Vertikalebene (V) befindet.

6. Maschine nach Anspruch 5, ***dadurch gekennzeichnet*, dass** sich der Ablenker (36) an den oberen Rändern der Seitenwände (5 und 6) des Wagenkastens (1) zwischen der die Drehachse (37) der Auflockertrommel (18) durchquerenden Vertikalebene (V) und einer die Rückseite der Auflockertrommel (18) berührenden Vertikalebene (P) befindet.

7. Maschine nach irgend einem der vorhergehenden Ansprüche, ***dadurch gekennzeichnet,* dass** die Halteglieder (28) aus dreieckigen Platten (30, 38) bestehen, die eine den Ablenker (29, 36) berührende Seite aufweisen und sich im Wesentlichen bis in die Bahn der Schneidwerkzeuge (26) der Auflockertrommel (18) erstrecken.

8. Maschine nach Anspruch 7, ***dadurch gekennzeichnet*, dass** von den Halteplatten (30, 38) mindestens zwei vorgesehen sind.

9. Maschine nach Anspruch 7 oder 8, ***dadurch gekennzeichnet*, dass** der Abstand zwischen den Halteplatten (30, 38) im Wesentlichen doppelt so groß ist wie der von Kränzen (25), an denen die Schneidwerkzeuge (26) der Auflockertrommel (18) befestigt sind.

10. Maschine nach irgend einem der Ansprüche 7, 8 oder 9, ***dadurch gekennzeichnet,* dass** die Halteplatten (30, 38) Rückseiten (33) aufweisen, die von der Auflockertrommel (18) aus nach oben und nach hinten gerichtet sind.

11. Maschine nach irgend einem der Ansprüche 7 bis 10, ***dadurch gekennzeichnet,* dass** die Halteplatten (30, 38) Rückseiten (33) aufweisen, die über ihre größere Länge kreisbogenförmig gekrümmt sind.

12. Maschine nach Anspruch 11, ***dadurch gekennzeichnet*, dass** die unteren Teile der Rückseiten (33) der Halteplatten (30, 38) bezüglich der Auflockertrommel (18) radial ausgerichtet sind.

13. Maschine nach Anspruch 11, ***dadurch gekennzeichnet*, dass** die oberen Teile der Rückseiten (33) der Halteplatten (30, 38) im Wesentlichen vertikal sind.

14. Maschine nach irgend einem der vorhergehenden Ansprüche, ***dadurch gekennzeichnet,* dass** die Auflockertrommel (18) an ihrem Umfang Schaufeln (27) trägt, die derart geneigt sind, um einen Winkel von ca. 35° zur Horizontalen zu bilden.

15. Maschine nach Anspruch 14, ***dadurch gekennzeichnet,* dass** die Schaufeln (27), die sich in der Nähe der Enden der Auflockertrommel (18) befinden, so ausgerichtet sind, dass ihre Vorderseiten zum mittleren Teil der Trommel (18) weisen.

16. Maschine nach Anspruch 14 oder 15, ***dadurch gekennzeichnet*, dass** die Schaufeln (27), die sich im mittleren Teil der Auflockertrommel (18) befinden, so ausgerichtet sind, dass ihre Vorderseiten zu den entsprechenden Enden der Trommel (18) weisen.

## Claims

1. Machine for distributing food or other products for livestock, comprising at least one tub (1) for transporting the products, an ejection blower (9) housed in a casing (8) at the front end of the tub (1), which casing (8) comprises an opening (10) for the products to enter and a side opening (11) for the products to leave, at least one unravelling drum (18) equipped with cutting tools (26) and located at the inlet to the casing (8) of the ejection blower (9), retaining members (28) placed above the said unravelling drum (18) and, above the unravelling drum (18), an inclined deflector (29, 36), ***characterized in* that** the said deflector extends substantially from the inlet opening (10) of the ejection casing (8) towards the top and the rear of the tub (1) substantially as far as the top of the side walls (5 and 6) of the said tub (1) so as to guide the products towards the inlet (10) or towards the tub (1) and **in that** the retaining members (28) extend from the said deflector (29, 36).

2. Machine according to Claim 1, ***characterized in* that** the deflector (29, 36) is curved.

3. Machine according to Claim 1 or 2, ***characterized in* that** the deflector (29) extends towards the rear approximately as far as a vertical plane (P) tangential to the rear side of the unravelling drum (18).

4. Machine according to Claim 1 or 2, ***characterized in* that** the deflector (36) comprises a lower part which is located in front of a vertical plane (V) passing through the axis of rotation (37) of the unravelling drum (18).

5. Machine according to any one of Claims 1, 2 or 4, ***characterized in* that** the deflector (36) comprises an upper part located at the rear of the vertical plane (V) passing through the axis of rotation (37) of the unravelling drum (18).

6. Machine according to Claim 5, ***characterized in* that**, at the top edges of the side walls (5 and 6) of the tub (1), the deflector (36) is located between the vertical plane (V) passing through the axis of rotation (37) of the unravelling drum (18) and a vertical plane (P) tangential to the rear side of the said unravelling drum (18).

7. Machine according to any one of the preceding claims, ***characterized in* that** the retaining members (28) consist of triangular plates (30, 38) having one side adjacent to the deflector (29, 36) and that extend substantially into the path of the cutting tools (26) of the unravelling drum (18).

8. Machine according to Claim 7, **characterized in that** there are at least two retaining plates (30, 38).

9. Machine according to Claim 7 or 8, ***characterized in* that** the spacing between the retaining plates (30, 38) is substantially twice that of rings (25) to which the cutting tools (26) of the unravelling drum (18) are fixed.

10. Machine according to any one of Claims 7, 8 or 9, ***characterized in* that** the retaining plates (30, 38) have rear sides (33) extending upwards and backwards from the unravelling drum (18).

11. Machine according to any one of Claims 7 to 10, ***characterized in* that** the retaining plates (30, 38) have rear sides (33) that are curved over most of their length in the form of circular arcs.

12. Machine according to Claim 11, ***characterized in* that** the lower parts of the rear sides (33) of the retaining plates (30, 38) are directed radially with respect to the unravelling drum (18).

13. Machine according to Claim 11, ***characterized in* that** the upper parts of the rear sides (33) of the retaining plates (30, 38) are substantially vertical.

14. Machine according to any one of the preceding claims, ***characterized in* that** the unravelling drum (18) carries, on its periphery, vanes (27) that are inclined in such a way as to make angles of about 35° with respect to the horizontal.

15. Machine according to Claim 14, ***characterized in* that** the vanes (27) located near the ends of the unravelling drum (18) are orientated in such a way that their front faces face towards the central part of the said drum (18).

16. Machine according to Claim 14 or 15, ***characterized in that*** the vanes (27) located in the central part of the unravelling drum (18) are orientated in such a way that their front faces face towards the corresponding ends of the said drum (18).
